# EUROPÄISCHE PATENTSCHRIFT

(11) **EP 2 790 958 B1**
(45) Veröffentlichungstag und Bekanntmachung des Hinweises auf die Patenterteilung: **02.12.2015**
(21) Anmeldenummer: 12799163.6
(22) Anmeldetag: 07.12.2012
(51) Int. Cl.: B60N 2/02, B60N 2/62

(54) **SITZTIEFENVERSTELLUNG, INSBESONDERE FÜR EINEN FAHRZEUGSITZ**
SEAT DEPTH ADJUSTMENT MECHANISM, IN PARTICULAR FOR A VEHICLE SEAT
RÉGLAGE DE LA PROFONDEUR D'UN SIÈGE, EN PARTICULIER POUR UN SIÈGE DE VÉHICULE

(30) Priorität: 13.12.2011 DE 102011088434
(43) Veröffentlichungstag der Anmeldung: 22.10.2014
(73) Patentinhaber: Bayerische Motoren Werke Aktiengesellschaft, 80809 München (DE)
(72) Erfinder: MÜLLER, Andreas, 84079 Bruckberg (DE)
(86) Internationale Anmeldenummer: PCT/EP2012/074789
(87) Internationale Veröffentlichungsnummer: WO 2013/087529

(56) Entgegenhaltungen:
- DE-A1- 4 423 926
- DE-A1- 19 644 606
- DE-A1- 19 734 712
- DE-A1-102010 011 134
- GB-A- 2 012 573

## Beschreibung

Die vorliegende Erfindung betrifft eine Sitztiefenverstellung, insbesondere für einen Fahrzeugsitz, mit einem an einem Sitz angeordneten Sitzteil, das eine Verstellung der Sitzkissenlänge ermöglicht, mit einem Unterteil, einem relativ zu dem Unterteil verschiebbaren Oberteil, das mit dem Sitzteil verbunden ist, und mit einem Rastmechanismus zum Festlegen des Oberteils bezüglich des Unterteils.

Sitztiefenverstellungen sind hinlänglich bekannt. Sie finden beispielsweise im Automobilbau oder auch bei Bürostühlen Anwendung.

Bekannte Sitztiefenverstellungen weisen oftmals eine Vielzahl von Einzelteilen aus, was sowohl hohe Herstellungs- als auch Montagekosten verursacht.

Aus der DE 196 44 606 A1 ist eine gattungsbildende Sitztiefenverstellung, insbesondere für einen Fahrzeugsitz, bekannt.

Aus der DE 197 34 712 A1 ist der Einsatz eines elastischen Ringes für eine Arretierungsvorrichtung bekannt.

Es ist daher Ausgabe der vorliegenden Erfindung, eine Sitztiefenverstellung anzugeben, die nur aus wenigen Einzelteilen besteht.

Diese Aufgabe wird erfindungsgemäß bei einer Sitztiefenverstellung gemäß Anspruch 1 gelöst.

Infolge dieser Ausgestaltung kann die gesamte Sitztiefenverstellung auf wenige Einzelteile reduziert werden.

Die Unteransprüche beinhalten vorteilhafte Weiterbildungen und Ausgestaltungen der Erfindung.

Gemäß einer vorteilhaften Weiterbildung sind das stabförmige Glied an dem Oberteil und das elastische Element an dem Unterteil angeordnet. Alternativ wäre aber auch eine umgekehrte Anordnung denkbar.

Vorteilhafterweise liegt das stabförmige Glied in der Ebene des Oberteils und steht frei von diesem vor. Dies erlaubt eine relativ geringe Dicke der gesamten Konstruktion.

Um ein stufenweises Verlängern der Sitzfläche zu ermöglichen, weist nach einer vorteilhaften Ausgestaltung das stabförmige Glied eine Vielzahl von Einschnürungen zum Eingriff für das elastische Element auf. Diese Einschnürungen bilden Raststellen für das elastische Element.

Besonders einfach lässt sich das elastische Element herstellen, wenn dieses gemäß einer bevorzugten Weiterbildung von einem aus einem Schaumstoff bestehenden Ring gebildet ist.

Damit das stabförmige Glied nicht aus dem elastischen Element herausgezogen werden kann, ist erfindungsgemäß benachbart zu dem stabförmigen Glied eine Auszugsbegrenzung vorgesehen.

Diese Auszugsbegrenzung lässt sich besonders einfach ausgestalten, wenn die Auszugsbegrenzung von zwei auf gegenüberliegenden Seiten des stabförmigen Gliedes liegenden Stäben gebildet ist, die an ihrem freien Ende eine hakenförmige, in Richtung auf das stabförmige Glied gerichtete Nase aufweisen.

Die Auszugsbegrenzung und das stabförmige Glied enden vorteilafterweise im Wesentlichen in der gleichen Ebene.

Um eine sichere und exakte Führung des Oberteils in dem Unterteil zu gewährleisten, weist das Oberteil gemäß einer vorteilhaften Weiterbildung stabförmige Führungsleisten auf, welche in dem Unterteil geführt sind.

Wenn die Führungsleisten, das stabförmige Glied und die Auszugsbegrenzung im Wesentlichen in einer Ebene liegen, ergibt sich ein besonders flaches Bauteil, das nur wenig Platz unter dem Sitz verbraucht.

Wenn das stabförmige Glied und die Auszugsbegrenzung im Wesentlichen mittig zwischen den Führungsleisten angeordnet sind, ist eine im Wesentlichen verkantungsfreie Führung gewährleistet.

Zur leichten und einfachen Bedienung der Sitztiefenverstellung ist an dem Oberteil eine Griffleiste zur Verstellung des Sitzteils angeordnet.

Erfindungsgemäß ist das Oberteil mit der Griffleiste, dem stabförmigen Glied, der Auszugsbeschränkung und den Führungsleisten einstückig ausgebildet.

Bevorzugt ist das Unterteil ein Spritzgussteil.

Weitere Einzelheiten, Merkmale und Vorteile der Erfindung ergeben sich aus der nachfolgenden Beschreibung anhand der Zeichnungen. Es zeigen:
- Figur 1: eine Explosionsansicht der erfindungsgemäßen Sitztiefenverstellung,
- Figur 2: ein Schnitt durch den vorderen Bereich eines Sitzes im Bereich der Sitztiefenverstellung in ausgefahrener Stellung, und
- Figur 3: ein Schnitt durch den vorderen Bereich eines Sitzes im Bereich der Sitztiefenverstellung in eingefahrener Stellung.

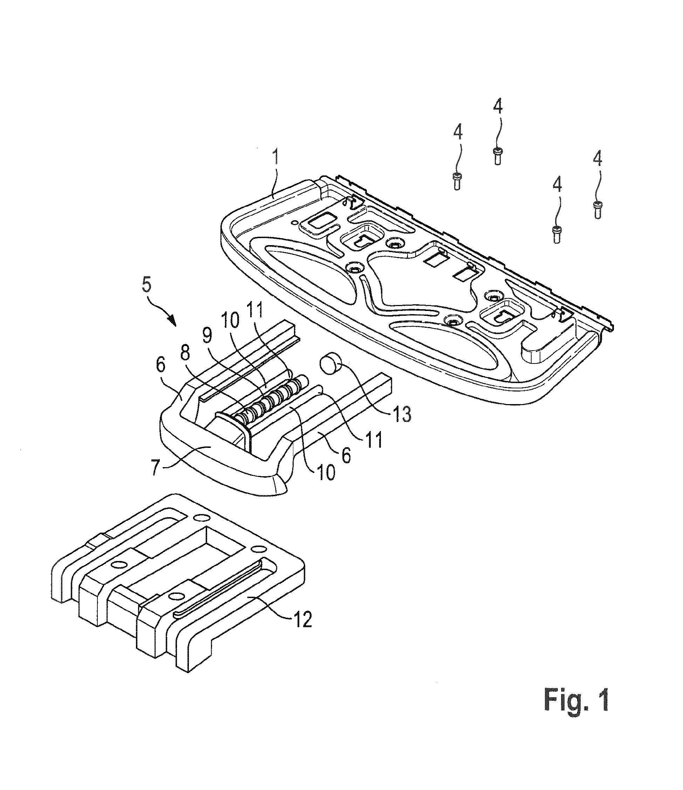

In Figur 1 sind die wesentlichen Einzelteile der erfindungsgemäßen Sitztiefenverstellung dargestellt.

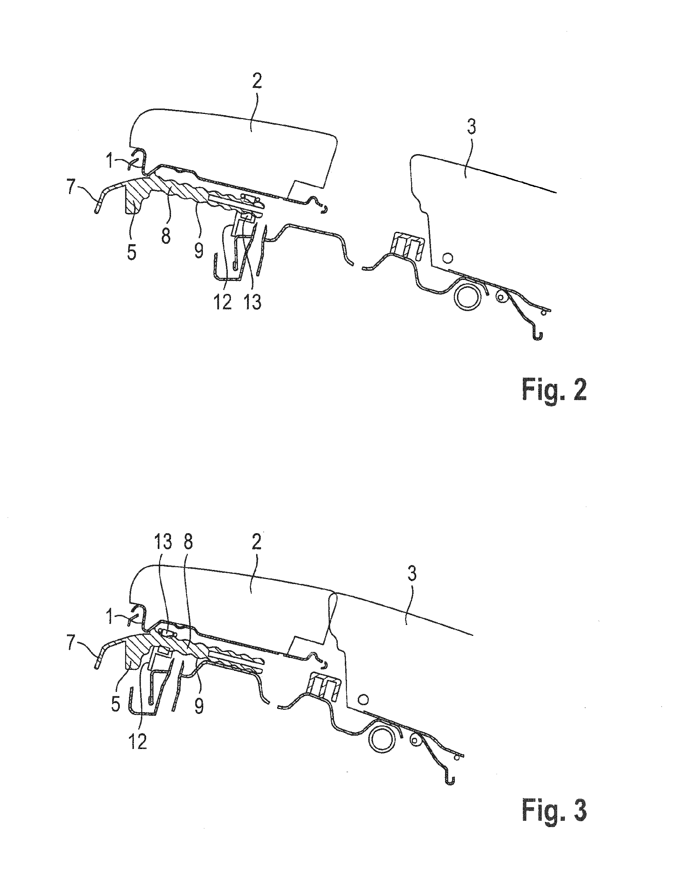

Die Sitztiefenverstellung weist ein Trägerteil 1 auf, auf welchem der vordere ausziehbare Teil 2 eines Sitzes 3 gelagert ist. Das Trägerteil 1 ist beispielsweise über Schrauben 4 mit einem im Wesentlichen U-förmigen Oberteil 5 verbunden. Die beiden freien Schenkel des U-förmigen Oberteils 5 bilden stabförmige Führungsleisten 6, während die Basis des U-förmigen Oberteils 5 als Griffleiste 7 ausgebildet ist, mit deren Hilfe die Sitztiefenverstellung betätigt werden kann. Aus ergonomischen Gründen kann die Griffleiste 7 nach unten (bezogen auf die Figuren 2 bzw. 3) abgewinkelt sein.

Im Wesentlichen mittig zwischen den Führungsleisten 6 steht von der Basis des U-förmigen Oberteils 5 ein stabförmiges Glied 8 frei vor, welches im Wesentlichen in einer Ebene mit den Führungsleisten 6 liegt. Das stabförmige Glied 8 ist mit einer Vielzahl von Einschnürungen 9 versehen.

Weiterhin ist benachbart zu dem stabförmigen Glied 8 eine Auszugsbegrenzung vorgesehen, welche von zwei auf gegenüberliegenden Seiten des stabförmigen Gliedes 8 liegenden Stäben 10 gebildet ist, die an ihrem freien Ende eine hakenförmige, in Richtung auf das stabförmige Glied 8 gerichtete Nase 11 aufweisen. Die Auszugsbegrenzung und das stabförmige Glied 8 enden im Wesentlichen in der gleichen Ebene.

Die Anordnung ist so getroffen, dass die Führungsleisten 6, das stabförmige Glied 8 und die Stäbe 10 der Auszugsbegrenzung im Wesentlichen in einer Ebene liegen und nur die Griffleiste 7 aus dieser Ebene heraus gebogen ist.

Das gesamte Oberteil 5 ist mit der Griffleiste 7, dem stabförmigen Glied 8, den Stäben 10 der Auszugsbeschränkung und den Führungsleisten 6 einstückig ausgebildet und vorzugsweise als Spritzgussteil ausgebildet.

Das Oberteil 5 ist mittels der Führungsleisten 6 in einem vorzugsweise ebenfalls als Spritzgussteil ausgebildeten Unterteil 12 geführt. In dem Unterteil 12 ist weiterhin ein elastisches Element festgelegt, welches von einem aus einem Schaumstoff bestehenden Ring 13 gebildet ist. In diesem Ring 13 ist das stabförmige Glied 8 des Oberteils 6 geführt. Der Ring 13 umschließt das stabförmige Glied 8 derart, dass eine gewisse Reibung zwischen dem Ring 13 und dem stabförmigen Glied 8 auftritt, die zur Betätigung der Sitztiefenverstellung überwunden werden muss.

Bei einer Sitztiefenverstellung wird über die Griffleiste 7 das Oberteil 5 bezüglich des Unterteils 12 verschoben. Dabei gleitet der Ring 13 aus einer der Einschnürungen 9 an dem stabförmigen Glied 8 heraus und rutscht je nach Länge des Verstellweges in eine andere Einschnürung 9 hinein. So kann die Sitztiefenverstellung in Stufen an die Bedürfnisse der jeweiligen Person angepasst werden.

Das Oberteil 5 kann nur so weit aus dem Unterteil 12 herausgezogen werden, bis die Nasen 11 an dem Ring 13 anschlagen. Somit ist der Auszugsweg im Wesentlichen durch die Länge des stabförmigen Gliedes 8 beschränkt.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung, wie sie durch die Ansprüche definiert ist, zu verlassen.

### Bezugszeichenliste

- 1: Trägerteil
- 2: ausziehbares Teil
- 3: Sitz
- 4: Schraube
- 5: Oberteil
- 6: Führungsleiste
- 7: Griffleiste
- 8: stabförmiges Glied
- 9: Einschnürung
- 10: Stab
- 11: Nase
- 12: Unterteil
- 13: Ring

## Patentansprüche

1. Sitztiefenverstellung, insbesondere für einen Fahrzeugsitz (3), mit einem an einem Sitz (3) angeordneten Sitzteil (2), das eine Verstellung der Sitzkissenlänge ermöglicht, mit einem Unterteil (12), einem relativ zu dem Unterteil (12) verschiebbaren Oberteil (5), das mit dem Sitzteil (2) verbunden ist, und mit einem Rastmechanismus zum Festlegen des Oberteils (5) bezüglich des Unterteils (12), wobei der Rastmechanismus mindestens ein stabförmiges Glied (8) umfasst, welches von einem elastischen Element (13) ringförmig umschlossen ist, wobei an dem Oberteil (5) eine Griffleiste (7) angeordnet ist, **dadurch gekennzeichnet, dass** benachbart zu dem stabförmigen Glied (8) eine Auszugsbegrenzung (10) vorgesehen ist und dass das gesamte Oberteil (5) mit der Griffleiste (7), dem stabförmigen Glied (8), den Stäben (10) der Auszugsbeschränkung und den Führungsleisten (6) einstückig ausgebildet und als Spritzgussteil ausgebildet ist.

2. Sitztiefenverstellung nach Anspruch 1, **dadurch gekennzeichnet, dass** das stabförmige Glied (8) an dem Oberteil (5) und das elastische Element (13) an dem Unterteil (12) angeordnet ist.

3. Sitztiefenverstellung nach Anspruch 1 oder 2, **dadurch gekennzeichnet, dass** das stabförmige Glied (8) in der Ebene des Oberteils (5) liegt und frei von diesem vorsteht.

4. Sitztiefenverstellung nach einem der Ansprüche 1 bis 3, **dadurch gekennzeichnet, dass** das stabförmige Glied (8) eine Vielzahl von Einschnürungen (9) zum Eingriff für das elastische Element (13) aufweist.

5. Sitztiefenverstellung nach einem der Ansprüche 1 bis 4, **dadurch gekennzeichnet, dass** das elastische Element von einem aus einem Schaumstoff bestehenden Ring (13) gebildet ist.

6. Sitztiefenverstellung nach Anspruch 1, **dadurch gekennzeichnet, dass** die Auszugsbegrenzung von zwei auf gegenüberliegenden Seiten des stabförmigen Gliedes (8) liegenden Stäben (10) gebildet ist, die an ihrem freien Ende eine hakenförmige, in Richtung auf das stabförmige Glied (8) gerichtete Nase (11) aufweisen.

7. Sitztiefenverstellung nach Anspruch 5 oder 6, **dadurch gekennzeichnet, dass** die Auszugsbegrenzung (10) und das stabförmige Glied (8) im Wesentlichen in der gleichen Ebene enden.

8. Sitztiefenverstellung nach einem der Ansprüche 1-7, **dadurch gekennzeichnet, dass** das Oberteil (5) stabförmige Führungsleisten (6) aufweist, welche in dem Unterteil (12) geführt sind.

9. Sitztiefenverstellung nach Anspruch 8, **dadurch gekennzeichnet, dass** die Führungsleisten, das stabförmige Glied (8) und die Auszugsbegrenzung (10) im Wesentlichen in einer Ebene liegen.

10. Sitztiefenverstellung nach einem der Ansprüche 8 oder 9, **dadurch gekennzeichnet, dass** das stabförmige Glied (8) und die Auszugsbegrenzung (10) im Wesentlichen mittig zwischen den Führungsleisten (6) angeordnet sind.

## Claims

1. A seat-depth adjusting means, especially for a seat (3) in a vehicle, comprising a part (2) disposed on a seat (3) for adjusting the length of the upholstery, also comprising a bottom part (12), a top part (5) movable relative to the bottom part (12) and connected to the part (2) and a locking mechanism for securing the top part (5) relative to the bottom part (12), wherein the locking mechanism comprises at least one rod-like member (8) surrounded by a resilient element (13), wherein a handle strip (7) is disposed on the top part (5), **characterised in that** an extension-limiting means (10) is provided near the rod-like member (8) and the entire top part (5) is an injection moulding integral with the handle strip (7), the rod-like member (8), the rods (10) of the extension-limiting means and the guide strips (6).

2. A means according to claim 1, **characterised in that** the rod-like member (8) is disposed on the top part (5) and a resilient element (13) is disposed on the bottom part (12).

3. A means according to claim 1 or claim 2, **characterised in that** the rod-like member (8) lies in the same plane as the top part (5) and projects therefrom.

4. A means according to any of claims 1 to 3, **characterised in that** the rod-like member (8) has a number of constrictions (9) for engaging the resilient element (13).

5. A means according to claims 1 to 4, **characterised in that** the resilient element is a ring (13) made of foam material.

6. A means according to claim 1, **characterised in that** the extension-limiting means is made up of two rods (10) lying on opposite sides of the rod-like member (8) and, their free ends ending in a hook-like lug (11) extending towards the rod-like member (8).

7. A means according to claim 5 or claim 6, **characterised in that** the extension-limiting means (10) and the rod-like member (8) end substantially in the same plane.

8. A means according to any of claims 1 - 7, **characterised in that** the top part (5) has rod-like guide strips (6) guided in the bottom part (12).

9. A means according to claim 8, **characterised in that** the guide strips, the rod-like member (8) and the extension-limiting means (10) lie substantially in the same plane.

10. A means according to claim 8 or claim 9, **characterised in that** the rod-like member (8) and the extension-limiting means (10) are disposed substantially at the centre between the guide strips (6).

## Revendications

1. Réglage de profondeur de siège, notamment pour un siège de véhicule (3) comportant une partie de siège (2) permettant de régler la longueur de l'assise, une partie inférieure (12), une partie supérieure (5) coulissant par rapport à la partie inférieure (12), cette partie supérieure étant reliée à la partie de siège (2) ainsi qu'un mécanisme d'encliquetage pour fixer la partie supérieure (5) à la partie inférieure (12),
- le mécanisme d'encliquetage comportant au moins un organe (8) en forme de tige entouré par un élément élastique (13) de forme annulaire, dans lequel la partie supérieure (5) comporte une poignée (7), **caractérisé en ce qu'**
- au voisinage de l'organe en forme de tige (8), il est prévu une limitation d'extraction (10) et l'ensemble de la partie supérieure (5) comprenant la poignée (7), l'organe en forme de tige (8), les tiges (10) de la limitation d'extraction et les longerons de guidage (6) est réalisé en une seule pièce injectée.

2. Réglage de profondeur de siège selon la revendication 1,
**caractérisé en ce que**
l'organe en forme de tige (8) est sur la partie supérieure (5) et l'élément élastique (13) sur la partie inférieure (12).

3. Réglage de profondeur de siège selon la revendication 1 ou 2,
**caractérisé en ce que**
l'organe en forme de tige (8) est dans le plan de la partie supérieure (5) et dépasse librement de celle-ci.

4. Réglage de profondeur de siège selon l'une des revendications 1 à 3,
**caractérisé en ce que**
l'organe en forme de tige (8) comporte un ensemble de rétrécissements (9) pour la prise de l'élément élastique (13).

5. Réglage de profondeur de siège selon l'une des revendications 1 à 4,
**caractérisé en ce que**
l'élément élastique est formé par un anneau (13) en mousse.

6. Réglage de profondeur de siège selon la revendication 1,
**caractérisé en ce que**
la limitation d'extraction est formée par deux tiges (10) situées de part et d'autre de l'organe en forme de tige (8), ces tiges ayant à leur extrémité libre, un bec (11) en forme de crochet orienté en direction de l'organe en forme de tige (8).

7. Réglage de profondeur de siège selon la revendication 5 ou 6,
**caractérisé en ce que**
la limitation d'extraction (10) et l'organe en forme de tige (8) se terminent essentiellement dans le même plan.

8. Réglage de profondeur de siège selon l'une des revendications 1 à 7,
**caractérisé en ce que**
la partie supérieure (5) comporte des longerons de guidage (6) en forme de tiges qui sont guidés dans la partie inférieure (12).

9. Réglage de profondeur de siège selon la revendication 8,
**caractérisé en ce que**
les longerons de guidage, l'organe en forme de tige (8) et la limitation d'extraction (10) se situent essentiellement dans un plan.

10. Réglage de profondeur de siège selon l'une des revendications 8 ou 9,
**caractérisé en ce que**
l'organe en forme de tige (8) et la limitation d'extraction (10) se situent essentiellement au milieu entre les longerons de guidage (6).
